# EUROPEAN PATENT APPLICATION

(11) **EP 2 390 147 A1**
(43) Date of publication of application: **30.11.2011**
(21) Application number: 11167620.1
(22) Date of filing: 26.05.2011
(51) Int. Cl.: B60R 22/38

(54) **Webbing retractor and method of manufacturing rotation detecting member**

(30) Priority: 27.05.2010 JP 2010122026
(71) Applicant: Kabushiki Kaisha Tokai Rika Denki Seisakusho, Ohguchi-cho Niwa-gun Aichi 480-0134 (JP)
(72) Inventor: Tatsuma, Atsushi, Niwa-gun,, Aichi 480-0134 (JP); Sumiyashiki, Akira, Niwa-gun,, Aichi 480-0134 (JP)
(74) Representative: TBK

(57) **Abstract**

In a webbing retractor (10), when a V gear (50) has been rotated in a withdrawal direction following a spool (20) and a W pawl (60) has been relatively displaced with respect to the V gear (50) by inertial force, the rotation of the V gear (50) is regulated and a lock plate (46) regulates the rotation of the spool (20). A first center-of-gravity adjusting hole (66) and a second center-of-gravity adjusting hole (68) are disposed in the W pawl (60), and the sensitivity of detecting the inertial force is adjusted as a result of a center-of-gravity position of the W pawl (60) being adjusted. The first center-of-gravity adjusting hole (66) and the second center-of-gravity adjusting hole (68) are disposed away from an outer peripheral surface of the W pawl (60), so the center-of-gravity position of the W pawl (60) becomes adjustable without having to change the outer peripheral shape of the W pawl (60).

## Description

### BACKGROUND OF THE INVENTION

### Field of the Invention

The present invention relates to a webbing retractor (webbing take-up device) that retracts webbing worn on an occupant of a vehicle and to a method of manufacturing a rotation detecting member in the webbing retractor.

### Description of the Related Art

In the seat belt device described in Japanese Patent Application Laid-Open (JP-A) No. 2004-161256, when a seat belt has been abruptly pulled out, a ratchet wheel is rotated following a spindle, and a second retaining pawl pivotally supported in the ratchet wheel is relatively rotated with respect to the ratchet wheel by inertial force. Because of this, the rotation of the ratchet wheel is regulated and the spindle is relatively rotated with respect to the ratchet wheel, whereby the rotation of the spindle is regulated by a first retaining pawl and the withdrawal of the seat belt is locked.

Here, in the above seat belt device, whether or not the second retaining pawl is relatively rotated with respect to the ratchet wheel by inertial force changes depending on the center-of-gravity position of the second retaining pawl, so the center-of-gravity position of the second retaining pawl affects the withdrawal sensitivity of the seat belt (the sensitivity of sensing an abrupt withdrawal of the seat belt).

For this reason, when the outer peripheral shape of the second retaining pawl is changed to adjust the center-of-gravity position of the second retaining pawl in order to adjust the withdrawal sensitivity of the seat belt, it is necessary to greatly change the forming die of the second retaining pawl.

### SUMMARY OF THE INVENTION

In consideration of the above circumstances, it is an object of the present invention to provide a webbing retractor in which the withdrawal sensitivity of the webbing can be easily adjusted by adjusting a center-of-gravity position of a rotation detecting member without having to change the outer peripheral shape of the rotation detecting member and to provide a method of manufacturing the rotation detecting member.

A webbing retractor of a first aspect of the present invention includes: a retracting shaft onto which webbing worn on an occupant of a vehicle is retracted and which is rotated in a withdrawal direction (pullout direction) as a result of the webbing being withdrawn; a lock member that regulates the rotation of the retracting shaft in the withdrawal direction as a result of the lock member being actuated; a rotating body that is connected to, so as to be capable of following the rotation of, the retracting shaft; and a rotation detecting member which is disposed so as to be relatively displaceable in the rotating body, in which an adjusting hole by which a center-of-gravity position of the rotation detecting member is adjusted is disposed away from an outer periphery of the rotation detecting member, by which the rotation of the rotating body in the withdrawal direction is regulated when the rotating body has been rotated in the withdrawal direction and the rotation detecting member has been relatively displaced with respect to the rotating body by inertial force, and which actuates the lock member.

A webbing retractor of a second aspect of the present invention is the webbing retractor of the first aspect, wherein the adjusting hole has a cross-sectional shape that is constant along its depth direction.

A webbing retractor of a third aspect of the present invention is the webbing retractor of the first or second aspect, wherein the rotation detecting member is disposed so as to be relatively rotatable with respect to the rotating body, and the adjusting hole is disposed on both sides of a line that joins the center of rotation of the rotating body and the center of rotation of the rotation detecting member.

A rotation detecting member manufacturing method of a fourth aspect of the present invention is a method of manufacturing a rotation detecting member in a webbing retractor equipped with a retracting shaft onto which webbing worn on an occupant of a vehicle is retracted and which is rotated in a withdrawal direction as a result of the webbing being withdrawn, a lock member that regulates the rotation of the retracting shaft in the withdrawal direction as a result of being actuated, a rotating body that is connected to, so as to be capable of following the rotation of, the retracting shaft and by which the lock member is actuated as a result of the retracting shaft being relatively rotated in the withdrawal direction, and a rotation detecting member which is disposed so as to be relatively displaceable in the rotating body and by which the rotation of the rotating body in the withdrawal direction is regulated when the rotating body has been rotated in the withdrawal direction and the rotation detecting member has been relatively displaced with respect to the rotating body by inertial force, the method including: providing a die for forming the rotation detecting member; disposing a pin such that the pin projects inside the die so as to form, away from an outer periphery of the rotation adjusting member, an adjusting hole for adjusting a center-of-gravity position of the rotation detecting member; and adjusting a projecting amount of the pin inside the die to thereby adjust the depth of the adjusting hole.

A rotation detecting member manufacturing method of a fifth aspect of the present invention is the rotation detecting member manufacturing method of the fourth aspect, wherein the rotation detecting member is disposed so as to be relatively rotatable with respect to the rotating body, and the adjusting hole is disposed on both sides of a line that joins the center of rotation of the rotating body and the center of rotation of the rotation detecting member.

In the webbing retractor of the first aspect of the present invention, the webbing worn on the occupant of the vehicle is retracted onto the retracting shaft, and the retracting shaft is rotated in the withdrawal direction as a result of the webbing being withdrawn from the retracting shaft. Further, the rotating body is connected to, so as to be capable of following the rotation of, the retracting shaft, and the rotation detecting member is disposed so as to be relatively displaceable in the rotating body.

When the rotating body has been rotated following the retracting shaft in the withdrawal direction and the rotation detecting member has been relatively displaced with respect to the rotating body by inertial force (inertial force on .the rotation detecting member has been detected), the rotation of the rotating body in the withdrawal direction is regulated and the lock member is actuated. Because of this, the lock member regulates the rotation of the retracting shaft in the withdrawal direction.

Further, the adjusting hole is disposed in the rotation detecting member, and the center-of-gravity position of the rotation detecting member is adjusted. Because of this, the inertial force for the rotation detecting member to be relatively displaced with respect to the rotating body is adjusted.

Here, the adjusting hole is disposed away from the outer periphery of the rotation detecting member.

For this reason, the center-of gravity position of the rotation detecting member can be adjusted without having to change the outer peripheral shape of the rotation detecting member. Because of this; the withdrawal sensitivity of the webbing (the sensitivity of detecting the inertial force on the rotation detecting member resulting from the rotation of the retracting shaft in the withdrawal direction) can be easily adjusted without having to greatly change the forming die of the rotation detecting member.

In the webbing retractor of the second aspect of the present invention, the adjusting hole has a cross-sectional shape that is constant along its depth direction. For this reason, the center-of-gravity position of the rotation detecting member can be precisely adjusted by adjusting the depth of the adjusting hole. Because of this, the withdrawal sensitivity of the webbing can be precisely adjusted.

In the webbing retractor of the third aspect of the present invention, the rotation detecting member is disposed so as to be relatively rotatable with respect to the rotating body, and the adjusting hole is disposed on both sides of the line that joins the center of rotation of the rotating body and the center of rotation of the rotation detecting member. For this reason, the center-of-gravity position of the rotation detecting member can be finely adjusted by adjusting each adjusting hole. Because of this, the withdrawal sensitivity of the webbing can be finely adjusted.

In the webbing retractor in which the rotation detecting member manufactured by the fourth aspect of the present invention is used, the webbing worn on the occupant of the vehicle is retracted onto the retracting shaft, and the retracting shaft is rotated in the withdrawal direction as a result of the webbing being withdrawn from the retracting shaft. Further, the rotating body is connected to, so as to be capable of following the rotation of, the retracting shaft, and the rotation detecting member is disposed so as to be relatively displaceable in the rotating body.

When the rotating body has been rotated following the retracting shaft in the withdrawal direction and the rotation detecting member has been relatively displaced with respect to the rotating body by inertial force (inertial force on the rotation detecting member has been detected), the rotation of the rotating body in the withdrawal direction is regulated. For this reason, the retracting shaft is relatively rotated in the withdrawal direction with respect to the rotating body, whereby the lock member is actuated and the rotation of the retracting shaft in the withdrawal direction is regulated.

Further, in the rotation detecting member manufacturing method of the fourth aspect of the present invention, the rotation detecting member is formed by the die, and the adjusting hole is formed in the rotation detecting member by the pin that is disposed projecting inside the die. Because of this, the center-of-gravity position of the rotation detecting member is adjusted by the adjusting hole, and the inertial force for the rotation detecting member to be relatively displaced with respect to the rotating body is adjusted.

Here, the adjusting hole is formed away from the outer periphery of the rotation detecting member. For this reason, the center-of-gravity position of the rotation detecting member can be adjusted without having to change the outer peripheral shape of the rotation detecting member. Because of this, the withdrawal sensitivity of the webbing can be easily adjusted without having to greatly change the forming die of the rotation detecting member.

Moreover, the depth of the adjusting hole is adjusted by adjusting the projecting amount of the pin inside the die. For this reason, the withdrawal sensitivity of the webbing can be even more easily adjusted.

In the webbing retractor in which the rotation detecting member manufactured by the fifth aspect of the present invention is used, the rotation detecting member is disposed so as to be relatively rotatable with respect to the rotating body.

In the rotation detection member manufacturing method of the fifth aspect of the present invention, the adjusting hole is disposed on both sides of the line that joins the center of rotation of the rotating body and the center of rotation of the rotation detecting member.

For this reason, the depth of each adjusting hole is adjusted by adjusting the projecting amounts, inside the die, of the pins corresponding to each adjusting hole, and the center-of-gravity position of the rotation detecting member can be finely adjusted. Because of this, the withdrawal sensitivity of the webbing can be finely adjusted.

### BRIEF DESCRIPTION OF THE DRAWINGS

FIG 1 is a plan view showing a W pawl of a webbing retractor pertaining to an embodiment of the present invention;
FIG. 2 is an exploded perspective view showing the webbing retractor pertaining to the embodiment of the present invention;
FIG. 3A and FIG 3B show the configuration of a lock mechanism in the webbing retractor pertaining to the embodiment of the present invention, with FIG 3 A being a plan view showing a state where the W pawl is held in a standby state and FIG. 3B being a plan view showing a state where the W pawl is engaged with ratchet teeth;
FIG. 4A and FIG. 4B show the configuration of the lock mechanism in the webbing retractor pertaining to the embodiment of the present invention, with FIG 4A being a plan view showing a state where a lock plate has been moved away from ratchet teeth and FIG. 4B being a plan view showing a state where the lock plate is engaged with the ratchet teeth;
FIG 5 is a longitudinal sectional view showing a die that forms the W pawl of the webbing retractor pertaining to the embodiment of the present invention; and
FIG. 6 is a conceptual diagram showing the relationship between inertial force and a center-of-gravity position of the W pawl of the webbing retractor pertaining to the embodiment of the present embodiment.

### DETAILED DESCRIPTION OF THE INVENTION

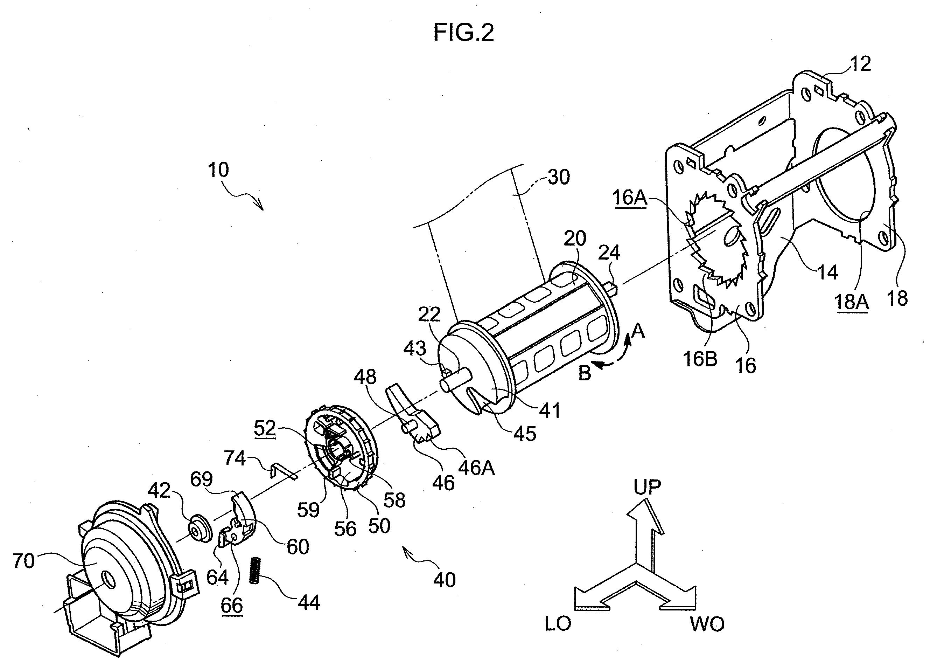

In FIG 2, the overall configuration of a webbing retractor 10 pertaining to an embodiment of the present invention is shown in an exploded perspective view. In the drawing, arrow LO represents one side in a vehicle longitudinal direction, arrow WO represents one side in a vehicle width direction, and arrow UP represents a vehicle up direction.

As shown in FIG 2, the webbing retractor 10 is equipped with a frame 12. The frame 12 is configured by a substantially plate-like back plate 14 and by a leg plate 16 and a leg plate 18 that integrally extend out from both width direction ends of this back plate 14. The leg plate 14 is secured to a vehicle body by unillustrated fastening means such as bolts, whereby the webbing retractor 10 is attached to the vehicle body. A circular placement hole 16A and a circular placement hole 18A are penetratingly formed in the leg plate 16 and in the leg plate 18, respectively, and ratchet teeth 16B (inner teeth) are formed on the outer periphery of the placement hole 16A.

A spool 20 serving as a retracting shaft manufactured by die casting or the like is rotatably placed between the leg plate 16 and the leg plate 18. The spool 20 has a drum shape overall, and a proximal end portion of webbing 30 formed in an elongate band is connectedly secured to the spool 20. When the spool 20 is rotated in one direction about its axis (the direction of arrow A in FIG 2; this direction will be called a "retraction direction (take-up direction)" below), the webbing 30 is retracted from its proximal end side in layers onto the outer peripheral portion of the spool 20. On the other hand, when the webbing 30 is pulled from its distal end side, in accompaniment therewith the spool 20 rotates in the other direction about its axis (the direction of arrow B in FIG. 2; this direction will be called a "withdrawal direction" below) and the webbing 30 is withdrawn.

A substantially cylindrical support shaft 22 is integrally disposed on the leg plate 16 side of the spool 20. The support shaft 22 projects via the placement hole 16A outside the leg plate 16 of the frame 12. A substantially rectangular column-shaped support shaft 24 is integrally disposed on the leg plate 18 side of the spool 20. The support shaft 24 is placed coaxially with the support shaft 22 and projects via the placement hole 18A outside the leg plate 18 of the frame 12.

A spiral spring (not shown) serving as retracting means is placed outside the leg plate 18 of the frame 12. The spiral direction outside end of the spiral spring is connected to the leg plate 18 (the frame 12). The spiral direction inside end of the spiral spring is secured to the support shaft 24 of the spool 20. The spiral spring biases the spool 20 in the retraction direction.

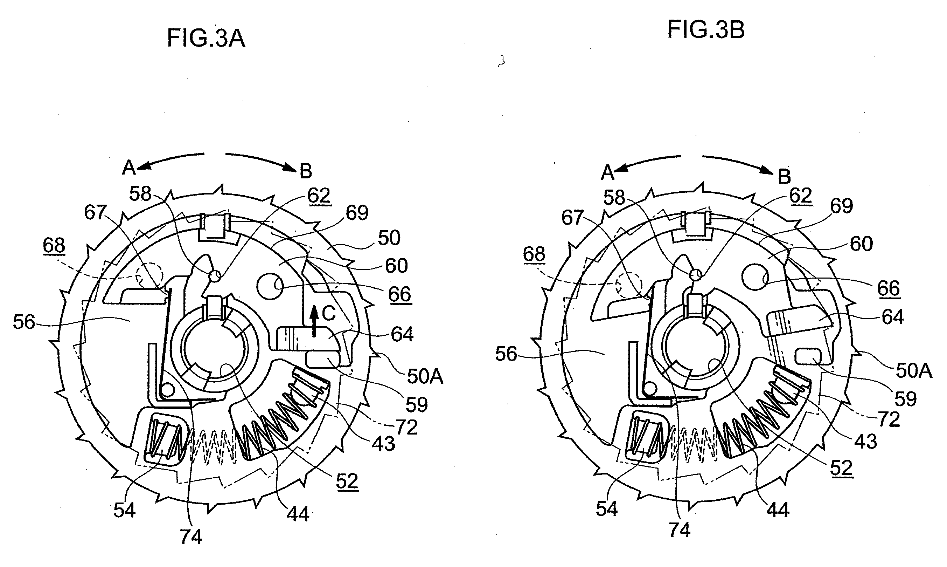

A lock mechanism 40 is disposed outside the leg plate 16 of the frame 12. The lock mechanism 40 is equipped with a sensor holder 70. The sensor holder 70 is formed in a concave shape opening toward the leg plate 16 side and is secured to the leg plate 16. As shown in FIG. 3A and FIG 3B, ratchet teeth 72 (inner teeth) are annularly formed inside the sensor holder 70. The ratchet teeth 72 correspond to an engaging tooth 64 of a W pawl 60 described later.

As shown in FIG 2, a lock base 41 is integrally disposed on the end portion of the spool 20 on the leg plate 16 side. The support shaft 22 projects from the lock base 41. The spool 20, the support shaft 22, and the lock base 41 are configured to be coaxially and integrally rotatable. A bush 42 is secured to the distal end portion of the support shaft 22. The bush 42 is rotatably supported in the sensor holder 70, whereby the support shaft 22 is rotatably supported in the sensor holder 70 via the bush 42.

As shown in FIG 2, FIG. 3A, and FIG 3B, a locking convex portion 43 is disposed on the lock base 41. The locking convex portion 43 corresponds to a return spring 44 described later. Further, as shown in FIG. 2, a movement notch 45 is formed in the lock base 41, and a plate-like lock plate 46 serving as a lock member is movably placed inside the movement notch 45.

A cylindrical guide projection 48 is integrally formed on the lock plate 46. The guide projection 48 projects outside the leg plate 16 of the frame 12 from the lock plate 46. Ratchet teeth 46A are formed on one end side portion of the lock plate 46. The ratchet teeth 46A are configured to be meshable with the ratchet teeth 16B of the leg plate 16 as a result of the lock plate 46 being moved inside the movement notch 45 toward the radial direction outside of the lock base 41.

As shown in FIG. 2, FIG. 3A, and FIG 3B, a V gear 50 serving as a rotating body is placed between the sensor holder 70 and the lock base 41. The V gear 50 is housed inside the sensor holder 70. The V gear 50 is formed in a disc shape, and a through hole 52 is disposed in the central portion of the V gear 50. The support shaft 22 of the spool 20 penetrates the through hole 52 between the lock base 41 and the bush 42. Because of this, the V gear 50 is coaxially rotatably attached to the support shaft 22 of the spool 20.

A locking projection 54 is disposed on the side surface of the V gear 50 on the lock base 41 side. A return spring 44 bridges the distance between the locking projection 54 and the locking convex portion 43 of the lock base 41. The return spring 44 is configured to be a compression coil spring and biases the V gear 50 in the withdrawal direction with respect to the lock base 41.

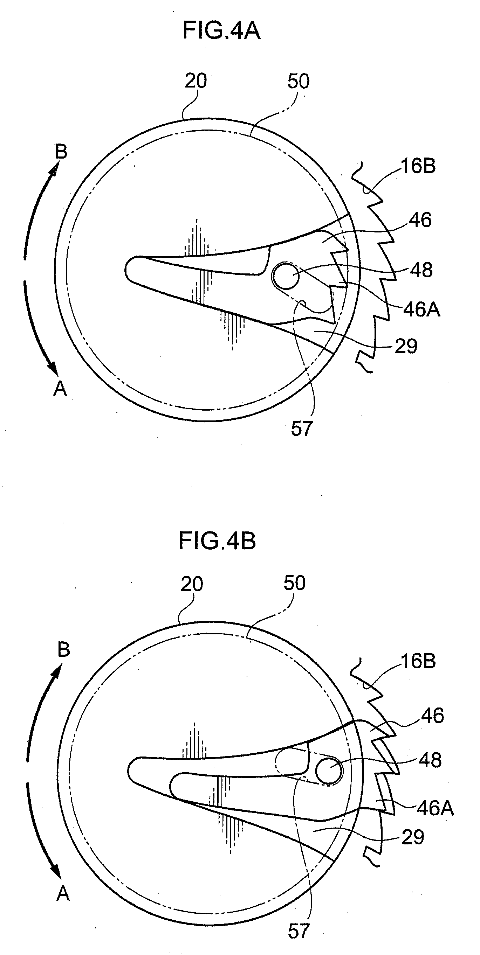

Further, as shown in FIG. 4A and FIG. 4B, an elongate guide groove 57 is formed in the side surface of the V gear 50 on the lock base 41 side. The distal end portion of the guide projection 48 of the lock plate 46 is inserted into the guide groove 57. For this reason, the guide projection 48 is locked in one end of the guide groove 57 by the biasing force of the return spring 44 (the state shown in FIG. 4A). As a result of the guide projection 48 being locked in the one end of the guide groove 57, the rotation of the V gear 50 in the withdrawal direction with respect to the lock base 41 by the return spring 44 is locked, so that ordinarily the V gear 50 is configured to be rotatable integrally with the lock base 41 (the spool 20).

As shown in FIG. 2, FIG 3A, and FIG. 3B, the V gear 50 has a housing portion 56 opening toward the sensor holder 70 side. A cylindrical support shaft 58 is disposed upright in the housing portion 56 so as to be parallel to the axial direction of the through hole 52. Further, a rectangular prism-shaped stopper 59 is formed in the housing portion 56 on the withdrawal direction side of the support shaft 58.

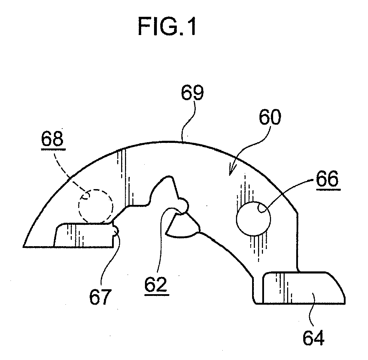

Further, a W pawl 60 serving as an engaging member (a meshing member) and as a rotation detecting member is placed in the housing portion 56. As shown in FIG 1 to FIG. 3B, the W pawl 60 is formed in a substantial C shape as seen in a front view, A cross-sectionally substantially semicircular support hole 62 is disposed in the central portion of the W pawl 60. The support shaft 58 of the housing portion 56 is inserted into the support hole 62. The W pawl 60 is pivotally supported so as to be swingable in a predetermined range about the axis of the support shaft 58. An outer peripheral surface 69 parallel to the axial direction of the support hole 62 is formed on the outer periphery of the W pawl 60. An engaging convex portion 67 is disposed on the outer peripheral surface 69 on one end (the end on the retraction direction side) of the W pawl 60. The engaging convex portion 67 corresponds to one end portion of a sensor spring 74 described later.

As shown in FIG. 2, FIG 3A, and FIG 3B, a sensor spring 74 serving as biasing means is placed in the housing portion 56 of the V gear 50. The sensor spring 74 is a cross-sectionally L-shaped plate-like spring. One lengthwise direction end portion of the sensor spring 74 is locked on the engaging convex portion 67. The other lengthwise direction end portion of the sensor spring 74 is locked on the V gear 50. Because of this, the sensor spring 74 biases the W pawl 60 toward the withdrawal direction side about the axis of the support shaft 58.

As shown in FIG. 1 to FIG. 3B, an engaging tooth 64 is formed on the other end (the end on the withdrawal direction side) of the W pawl 60. The engaging tooth 64 touches the stopper 59 of the V gear 50 as a result of the W pawl 60 being biased toward the withdrawal direction side about the axis of the support shaft 58 by the sensor spring 74 (the state shown in FIG 3A; this state will be called a "standby state"). The engaging tooth 64 moves closer to the ratchet teeth 72 of the sensor holder 70 and meshes with the ratchet teeth 72 as a result of the W pawl 60 being swung in the retraction direction about the axis of the support shaft 58 (the direction of arrow C in FIG 3A; this direction will be called a "lock activation direction"). Because of this, the rotation of the V gear 50 in the withdrawal direction is regulated (the state shown in FIG 3B; in this state, the rotation of the V gear 50 in the retraction direction is permitted). On the other hand, the engaging tooth 64 is moved away from the ratchet teeth 72 as a result of the W pawl 60 being swung toward the standby state side. Because of this, the regulation of the rotation of the V gear 50 in the withdrawal direction is released.

A first center-of-gravity adjusting hole 66 serving as an adjusting hole is formed in the side surface of the W pawl 60 on the sensor holder 70 side. The first center-of-gravity adjusting hole 66 is formed in a cylindrical shape and has a cross-sectional shape that is constant along its depth direction. Further, the first center-of-gravity adjusting hole 66 is located away from the outer peripheral surface 69 and is placed on the engaging tooth 64 side with respect to, a line that joins the center of the through hole 52 in the V gear 50 and the center of the support hole 62 in the W pawl 60.

Further, a second center-of-gravity adjusting hole 68 serving as an adjusting hole is formed in the side surface of the W pawl 60 on the opposite side of the sensor holder 70 side. The second center-of-gravity adjusting hole 68 is formed in a cylindrical shape and has a cross-sectional shape that is constant along its depth direction. Further, the second center-of-gravity adjusting hole 68 is located away from the outer peripheral surface 69 and is placed on the opposite side of the engaging tooth 64 side with respect to the line that joins the center of the through hole 52 in the V gear 50 and the center of the support hole 62 in the W pawl 60.

Here, as shown in FIG. 4A and FIG. 4B, when the rotation of the V gear 50 in the withdrawal direction is regulated in a state where the spool 20 and the V gear 50 are rotated in the withdrawal direction, the lock base 41 (the spool 20) is relatively rotated in the withdrawal direction with respect to the V gear 50 counter to the biasing force of the return spring 44 (the V gear 50 is relatively rotated in the retraction direction with respect to the lock base 41 (the spool 20)). At this time, the guide projection 48 of the lock plate 46 is moved from the one end of the guide groove 57 in the V gear 50 to the other end, and the lock plate 46 is moved toward the radial direction outside of the lock base 41 (the lock plate 46 is moved from the state shown in FIG. 4A to the state shown in FIG. 4B). Because of this, the ratchet teeth 46A of the lock plate 46 mesh with the ratchet teeth 16B of the leg plate 16 of the frame 12, whereby the rotation of the lock plate 46 in the withdrawal direction is regulated and the rotation of the spool 20 in the withdrawal direction is regulated (the state shown in FIG 4B; the rotation of the lock plate 46 and the spool 20 in the retraction direction is permitted).

Next, a method of manufacturing the W pawl 60, which is a component of the webbing retractor 10 pertaining to the present embodiment, will be described.

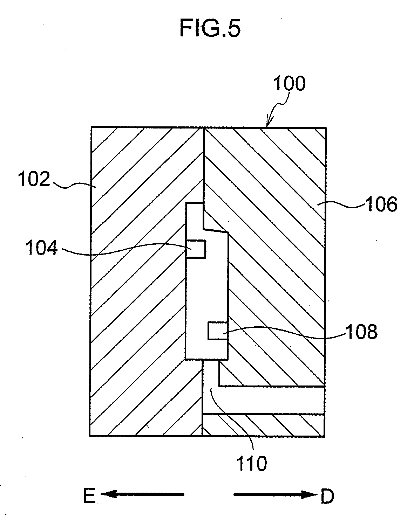

In FIG. 5, a die 100 for forming the W pawl 60 pertaining to the embodiment of the present invention is shown in a longitudinal sectional view.

As shown in FIG 5, the arrow E direction side portion of the die 100 is configured by a movable die 102. The inside of the movable die 102 opens to the arrow D direction side. A pin 104 corresponding to the first center-of-gravity adjusting hole 66 in the W pawl 60 is disposed inside the movable die 102. The pin 104 is detachably secured to the movable die 102.

The arrow D direction side portion of the die 100 is configured by a fixed die 106. The inside of the fixed die 106 opens to the arrow E direction side. A pin 108 corresponding to the second center-of-gravity adjusting hole 68 in the W pawl 60 is disposed inside the fixed die 106. The pin 108 is detachably secured to the fixed die 106.

A gate portion 110 is disposed in the fixed die 106. A material such as zinc alloy is injected into the die 100 from the gate portion 110. Thus, the W pawl 60 is formed, and the first center-of-gravity adjusting hole 66 and the second center-of-gravity adjusting hole 68 are formed by the pin 104 and the pin 108, respectively.

Further, projecting amounts of the pin 104 and the pin 108 inside the die 100 are changed by replacing the pins to change their heights. Because of this, the first center-of-gravity adjusting hole 66 and the second center-of-gravity adjusting hole 68 are formed in the W pawl 60 such that their depths are changeable.

Next, the action of the present embodiment will be described.

In the webbing retractor 10, when the webbing 30 in a state where it is retracted onto the spool 20 is pulled toward its distal end side counter to the biasing force of the spiral spring, the webbing 30 is withdrawn and the spool 20 is rotated in the withdrawal direction.

The webbing 30 that has been withdrawn is placed around the body of an occupant, and, for example, a tongue plate disposed on the lengthwise direction middle portion of the webbing 30 is held in a buckle device disposed on the side of a seat in the vehicle, whereby the webbing 30 is worn on the body of the occupant.

When the vehicle suddenly decelerates, the body of the occupant moves substantially toward the front side of the vehicle and abruptly pulls the webbing 30. At this time, the spool 20 (including the support shaft 22 and the lock base 41) is abruptly rotated in the withdrawal direction, and the V gear 50 is abruptly rotated in the withdrawal direction together with the W pawl 60.

At this time, the W pawl 60 tries to stay in that position without rotating with respect to the V gear 50 because of inertial force and is swung in the lock activation direction relatively with respect to the V gear 50 counter to the biasing force of the sensor spring 74. Because of this, the engaging tooth 64 of the W pawl 60 moves closer to and meshes with the ratchet teeth 72 of the sensor holder 70 (the state shown in FIG. 3B).

The engaging tooth 64 of the W pawl 60 meshes with the ratchet teeth 72 of the sensor holder 70, whereby the rotation of the V gear 50 in the withdrawal direction is regulated and the lock base 41 (the spool 20) is relatively rotated in the withdrawal direction with respect to the V gear 50 counter to the biasing force of the return spring 44 (the V gear 50 is relatively rotated in the retraction direction with respect to the lock base 41).

When the lock base 41 (the spool 20) is relatively rotated in the withdrawal direction with respect to the V gear 50, the guide projection 48 of the lock plate 46 is moved from the one end of the guide groove 57 in the V gear 50 to the other end, and the lock plate 46 is moved toward the radial direction outside of the lock base 41. For this reason, the ratchet teeth 46A of the lock plate 46 mesh with the ratchet teeth 16B of the leg plate 16 of the frame 12, whereby the rotation of the lock plate 46 in the withdrawal direction is regulated and the rotation of the spool 20 in the withdrawal direction is regulated (the state shown in FIG. 4B). Because of this, the body of the occupant trying to move by inertia toward the vehicle front side is reliably restrained and held by the webbing 30.

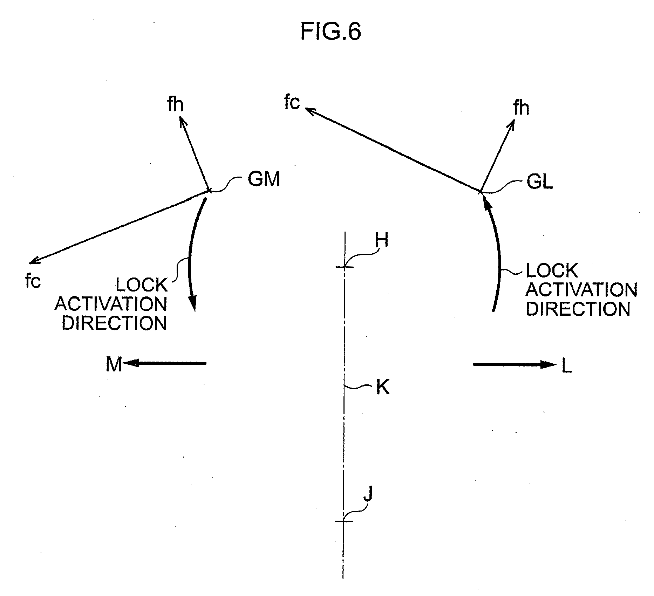

As shown in FIG. 6, when the spool 20 is abruptly rotated in the withdrawal direction and the W pawl 60 is swung in the lock activation direction relatively with respect to the V gear 50, inertial force (a radial direction force fh and a circumferential direction force fc centered on the through hole 52 in the V gear 50 (centrifugal force)) acts on the W pawl 60.

Consequently, in a case where the center-of-gravity position (position GL in FIG. 6) of the W pawl 60 is set on the engaging tooth 64 side (the arrow L side in FIG. 6) with respect to a line (line K in FIG 6) that joins the center of the through hole 52 in the V gear 50 (position J in FIG 6) and the center of the support hole 62 in the W pawl 60 (position H in FIG 6), the orientations of the direction of the force fh and the lock activation direction of the W pawl 60 come to be on the same side. For this reason, it becomes easier for the W pawl 60 to be relatively rotated with respect to the V gear 50, and the withdrawal sensitivity of the webbing 30 (the sensitivity of detecting the inertial force on the W pawl 60 resulting from the rotation of the spool 20 in the withdrawal direction) becomes higher.

On the other hand, in a case where the center-of-gravity position (position GM in FIG 6) of the W pawl 60 is set on the opposite side of the engaging tooth 64 side (the arrow M side in FIG 6) with respect to the line (line K in FIG 6) that joins the center of the through hole 52 in the V gear 50 and the center of the support hole 62 in the W pawl 60, the orientations of the direction of the force fh and the lock activation direction come to be on opposite sides. For this reason, it becomes more difficult for the W pawl 60 to be relatively rotated with respect to the V gear 50, and the withdrawal sensitivity of the webbing 30 becomes lower.

In this way, the withdrawal sensitivity of the webbing 30 changes as the center-of gravity position of the W pawl 60 changes in the circumferential direction centered on the through hole 52 in the V gear 50.

Further, as the distance between the center-of gravity position of the W pawl 60 and the through hole 52 in the V gear 50 increases, the force fh acting on the W pawl 60 becomes larger. For this reason, the withdrawal sensitivity of the webbing 30 changes even as the center-of-gravity position of the W pawl 60 changes in the radial direction centered on the through hole 52 in the V gear 50.

Incidentally, the center-of-gravity position of the W pawl 60 changes as a result of the position and the size (including the depth and the shape) of the first center-of-gravity adjusting hole 66 and the second center-of-gravity adjusting hole 68 formed in the W pawl 60 being changed.

Here, the first center-of-gravity adjusting hole 66 and the second center-of-gravity adjusting hole 68 in the W pawl 60 are placed away from the outer peripheral surface 69 of the W pawl 60.

For this reason, the center-of-gravity position of the W pawl 60 can be adjusted without having to change the outer peripheral shape (the outer peripheral surface 69) of the W pawl 60. Because of this, the withdrawal sensitivity of the webbing 30 of the webbing retractor 10 can be adjusted without having to greatly change the forming die of the W pawl 60.

Moreover, the first center-of-gravity adjusting hole 66 has a cross-sectional shape that is constant along its depth direction, and the second center-of gravity adjusting hole 68 has a cross-sectional shape that is constant along its depth direction. For this reason, the center-of-gravity position of the W pawl 60 can be precisely adjusted by adjusting the depths of the first center-of-gravity adjusting hole 66 and the second center-of-gravity adjusting hole 68. Because of this, the withdrawal sensitivity of the webbing 30 of the webbing retractor 10 can be precisely adjusted.

Further, the first center-of gravity adjusting hole 66 is placed on the engaging tooth 64 side (the arrow L side in FIG 6) with respect to the line (line K in FIG. 6) that joins the center of the through hole 52 in the V gear 50 and the center of the support hole 62 in the W pawl 60, and the second center-of-gravity adjusting hole 68 is placed on the opposite side (the arrow M side in FIG. 6) of the engaging tooth 64 side with respect to the line (line K in FIG. 6) that joins the center of the through hole 52 in the V gear 50 and the center of the support hole 62 in the W pawl 60. For this reason, the center-of-gravity position of the W pawl 60 can be finely adjusted by adjusting the depths of the first center-of-gravity adjusting hole 66 and the second center-of-gravity adjusting hole 68. Because of this, the withdrawal sensitivity of the webbing 30 of the webbing retractor 10 can be finely adjusted.

In the present embodiment, the shapes of the first center-of-gravity adjusting hole 66 and the second center-of-gravity adjusting hole 68 are circular, but the shapes of the first center-of-gravity adjusting hole 66 and the second center-of-gravity adjusting hole 68 are not limited to this. For example, the first center-of-gravity adjusting hole 66 and the second center-of-gravity adjusting hole 68 may also be rectangular holes.

Further, in the present embodiment, the first center-of-gravity adjusting hole 66 is placed in the side surface of the W pawl 60 on the sensor holder 70 side, and the second center-of-gravity adjusting hole 68 is placed in the side surface of the W pawl 60 on the opposite side of the sensor holder 70 side. Instead of this, the first center-of-gravity adjusting hole 66 and the second center-of-gravity adjusting hole 68 may also be placed in the same surface.

Moreover, in the present embodiment, the webbing retractor 10 has been given a configuration where two adjusting holes (the first center-of-gravity adjusting hole 66 and the second center-of-gravity adjusting hole 68) are disposed, but the webbing retractor 10 may be given a configuration where one or three or more adjusting holes are disposed.

Further, in the present embodiment, the webbing retractor 10 has been given a configuration where the W pawl 60 is relatively rotated with respect to the V gear 50 and the engaging tooth 64 of the W pawl 60 meshes with the ratchet teeth 72 of the sensor holder 70. Instead of this, the webbing retractor 10 may be given a configuration where the W pawl 60 and the engaging tooth 64 are separate members. In this case, the W pawl 60 is relatively displaced with respect to the V gear 50, whereby the engaging tooth 64 is relatively displaced with respect to the V gear 50 by the W pawl 60 and the engaging tooth 64 meshes with the ratchet teeth 72.

In a webbing retractor, when a V gear has been rotated in a withdrawal direction following a spool and a W pawl has been relatively displaced with respect to the V gear by inertial force, the rotation of the V gear is regulated and a lock plate regulates the rotation of the spool. A first center-of-gravity adjusting hole and a second center-of-gravity adjusting hole are disposed in the W pawl, and the sensitivity of detecting the inertial force is adjusted as a result of a center-of-gravity position of the W pawl being adjusted. The first center-of-gravity adjusting hole and the second center-of-gravity adjusting hole are disposed away from an outer peripheral surface of the W pawl, so the center-of-gravity position of the W pawl becomes adjustable without having to change the outer peripheral shape of the W pawl.

## Claims

1. A webbing retractor comprising:
a retracting shaft onto which webbing worn on an occupant of a vehicle is retracted and which is rotated in a withdrawal direction as a result of the webbing being withdrawn;
a lock member that regulates the rotation of the retracting shaft in the withdrawal direction as a result of the lock member being actuated;
a rotating body that is connected to, so as to be capable of following the rotation of, the retracting shaft; and
a rotation detecting member which is disposed so as to be relatively displaceable in the rotating body, in which an adjusting hole by which a center-of-gravity position of the rotation detecting member is adjusted is disposed away from an outer periphery of the rotation detecting member, by which the rotation of the rotating body in the withdrawal direction is regulated when the rotating body has been rotated in the withdrawal direction and the rotation detecting member has been relatively displaced with respect to the rotating body by inertial force, and which actuates the lock member.

2. The webbing retractor according to claim 1, wherein the adjusting hole has a cross-sectional shape that is constant along its depth direction.

3. The webbing retractor according to claim 1 or 2, wherein the rotation detecting member is disposed so as to be relatively rotatable with respect to the rotating body, and the adjusting hole is disposed on both sides of a line that joins the center of rotation of the rotating body and the center of rotation of the rotation detecting member.

4. A method of manufacturing a rotation detecting member in a webbing retractor equipped with a retracting shaft onto which webbing worn on an occupant of a vehicle is retracted and which is rotated in a withdrawal direction as a result of the webbing being withdrawn, a lock member that regulates the rotation of the retracting shaft in the withdrawal direction as a result of being actuated, a rotating body that is connected to, so as to be capable of following the rotation of, the retracting shaft and by which the lock member is actuated as a result of the retracting shaft being relatively rotated in the withdrawal direction, and a rotation detecting member which is disposed so as to be relatively displaceable in the rotating body and by which the rotation of the rotating body in the withdrawal direction is regulated when the rotating body has been rotated in the withdrawal direction and the rotation detecting member has been relatively displaced with respect to the rotating body by inertial force, the method comprising:
providing a die for forming the rotation detecting member;
disposing a pin such that the pin projects inside the die so as to form, away from an outer periphery of the rotation adjusting member, an adjusting hole for adjusting a center-of-gravity position of the rotation detecting member; and
adjusting a projecting amount of the pin inside the die to thereby adjust the depth of the adjusting hole.

5. The rotation detecting member manufacturing method according to claim 4, wherein the rotation detecting member is disposed so as to be relatively rotatable with respect to the rotating body, and the adjusting hole is disposed on both sides of a line that joins the center of rotation of the rotating body and the center of rotation of the rotation detecting member.
